# EUROPÄISCHE PATENTANMELDUNG

(11) **EP 2 505 809 A1**
(43) Veröffentlichungstag der Anmeldung: **03.10.2012**
(21) Anmeldenummer: 12161025.7
(22) Anmeldetag: 23.03.2012
(51) Int. Cl.: F02D 13/02, F02B 75/02, F02B 1/02, F02B 1/06, F02B 1/10

(54) **Verbrennungsmotor mit großem Verdichtungsverhältnis und Verfahren zu dessen Betrieb**

(30) Priorität: 29.03.2011 DE 102011015394
(71) Anmelder: Weigel, Doris, 56317 Urbach (DE)
(72) Erfinder:
(74) Vertreter: Engel, Christoph Klaus

(57) **Zusammenfassung**

Die Erfindung betrifft einen Verbrennungsmotor mit mindestens zwei Zylindern, jeweils einem darin zwischen einem oberen Totpunkt und einem unteren Totpunkt hin und her beweglichen Kolben und mit einem Zylinderkopf mit mindestens einem Einlassventil und mindestens einem Auslassventil. Das Verdichtungsverhältnis (bestimmt durch den Quotienten aus Zylinderraum und Brennraum) beträgt 15:1 bis 22:1. Eine Ventilsteuereinrichtung ist derart konfiguriert, dass das Einlassventil im Ansaugtakt bereits zwischen 80° und 120° Kurbelwellenwinkel nach dem oberen Totpunkt des Kolbens schließt. Die Erfindung betrifft außerdem ein Verfahren zum Betrieb eines Verbrennungsmotors mit einem Verdichtungsverhältnis von 15:1 bis 22:1 und einen Bausatz zum Umrüsten eines handelsüblichen Otto-Viertaktmotors.

## Beschreibung

Die Erfindung betrifft einen Verbrennungsmotor gemäß dem Oberbegriff des Anspruchs 1. Grundsätzlich handelt es sich um einen Otto-Viertaktmotor, dem allerdings ein "fünfter" Arbeitstakt hinzugefügt wird, der sich in herkömmlichen Motoren nicht findet.

Bereits seit vielen Jahren wird im Bereich der Verbrennungsmotoren nach Optimierungen hinsichtlich der Motorleistung, des Kraftstoffverbrauchs und der Umwelteigenschaften gesucht.

Das Verdichtungsverhältnis von Otto-Viertaktmotoren hat sich bis zu den 60er Jahren gegenüber Automobilen der 30er Jahre nahezu verdoppelt: von durchschnittlich 5:1 (z.B. Baujahr 1931, 3,3 Liter, 6 Zylinder, 50 PS: ε = 4,8:1) auf durchschnittlich 9:1 (z.B. Baujahr 1968, 2 Liter, 4 Zylinder, 120 PS, ε = 9,3:1).

Heute liegt das Verdichtungsverhältnis eines nicht aufgeladenen Ottomotors bei KFZ, welcher für Normalbenzin ausgelegt ist, typisch bei 10:1. Auf Zuverlässigkeit optimierte Flugmotoren laufen oft mit nur 7:1. Bei Dieselmotoren liegt die Verdichtung prinzipbedingt höher, ein typischer Wert bei nicht aufgeladenen PKW-Dieseln ist 20:1. Das Verdichtungsverhältnis ist demnach seit über 40 Jahren eine annähernd konstante Größe geblieben.

Es ist bekannt, dass mit höherem Verdichtungsverhältnis der Wirkungsgrad des Motors ansteigt. Gleichzeitig nimmt bei Ottomotoren allerdings auch die Klopfneigung zu. Das Klopfen kann wiederum durch Benzin mit höherer Oktanzahl, Optimierung der Brennraumform oder den Einsatz mehrerer Zündkerzen reduziert werden. Teilweise wird auch ein Klopfsensor eingesetzt, der bei minderwertigem Benzin den Zündzeitpunkt in Richtung spät verlegt.

Eine weitere Erhöhung des Verdichtungsverhältnisses ist bisher technisch nicht gelungen, u.a. weil bei zu hoher Verdichtung die Temperatur des Luft-Kraftstoff-Gemisches so sehr ansteigt, das es zu Selbstzündungen kommen kann. Der Motor würde dann nicht mehr laufen.

Im Ergebnis der Bemühungen der Automobilhersteller um sparsame leistungsfähige Motoren entstanden zahlreiche Steuerstrategien für derartige Motoren. Mittlerweile bieten fast alle Hersteller Systeme mit variablen Steuerzeiten und auch mit Ventilhubverstellung an. Bei der Phasenverstellung der Nockenwelle (Nockenwellenverstellung) kann die Ventilüberschneidung an verschiedene Drehzahlen und Lastverhältnisse des Motors angepasst werden. Bei Nockenwellen mit schaltbaren Nocken werden die Ventile durch Schwing- oder Kipphebelhebel betätigt, denen jeweils ein anders geformter Nocken zugeordnet ist. Es wird hierbei zwischen zwei Nockenformen umgeschaltet, meist durch Längsverschiebung der Nockenwelle oder einzelner Abschnitte auf der Nockenwelle. Damit lassen sich Hub (Öffnungsquerschnitt) und Steuerzeit des jeweiligen Ventils ändern. Durch eine Längsverschiebung der Nockenwelle oder einzelner Abschnitte darauf kommt entweder das Nockenprofil für niedrige oder für hohe Drehzahlen zum Tragen.

Bei anderen Systemen werden die Einlassventile statt über eine Nockenwelle über ein Hydrauliksystem gesteuert. So kann das Luft-Benzin-Gemisch zu nahezu jedem beliebigen Zeitpunkt und in fast jeder gewünschten Menge in den Zylinder eingespritzt werden. Somit kann die Gemischzufuhr jedem Lastzustand optimal angepasst werden. Solche Systeme sind mechanisch aufwendig und/oder erfordern eine teuere elektronische Steuerung.

Weiterhin sind beispielsweise Abgasrückverdichtungs- und Abgasrücksaug-Ventilstrategien bekannt, um eine Selbstzündung bei Ottomotoren zu ermöglichen. Bei dieser Betriebsart wird das Luft-Kraftstoff-Gemisch nicht durch Fremdzündung, sondern durch kontrollierte Selbstzündung expandiert. Die Selbstzündung wird beispielsweise durch einen hohen Anteil an heißen Restgasen und/oder durch eine hohe Verdichtung und/oder eine hohe Lufteintrittstemperatur hervorgerufen.

Verbrennungsmotoren mit Selbstzündung sind beispielsweise aus US 6 260 520, US 6 390 054, DE 199 27 479 A1, WO 98/10179 und DE 11 2005 001 573 T5 bekannt. Diese Betriebsart hat gegenüber der fremdgezündeten Verbrennung den Vorteil eines reduzierten Kraftstoffverbrauchs und geringerer Schadstoffemissionen. Allerdings ist die Regelung des Verbrennungsprozesses sehr komplex.

Aus der DE 10 2007 030 280 A1 ist ein Verfahren zum Betrieb eines Ottomotors mit Benzindirekteinspritzung und variablem Ventiltrieb in einer gesteuerten selbstzündenden Betriebsart bekannt. Dieses Verfahren überwacht als Ist-Werte beispielsweise Temperatur und/oder Druck des Gases im Brennraum vor, während und nach der Verbrennung, Lambda-Wert oder Zündzeitpunkt und regelt sie bei einer Abweichung derart, dass in einem nachfolgenden Arbeitszyklus Druck und Temperatur des Arbeitsgases eine Selbstzündung erlauben. So wird beispielsweise bei Zündaussetzern nachfolgend für mindestens einen

Arbeitstakt auf eine fremdgezündete Betriebsart übergegangen. In diesem Verfahren ist auch vorgesehen, das Verdichtungsverhältnis dynamisch zu erhöhen, zum Beispiel durch eine mechanische Vorrichtung oder durch eine Veränderung der Steuerzeiten der Ein- und Auslassventile. Es ist vorgesehen, das Verdichtungsverhältnis und/oder die Einspritzmenge und/oder den Einspritzzeitpunkt und/oder die Restgasrückführung und/oder die Luftmenge zyklussynchron mittels eines Computerprogramms und aufwendiger Istwerterfassung zu regeln.

Die DE 11 2005 001 605 T5 betrifft einen Motor und ein Verfahren zum Betreiben eines Motors mit Benzindirekteinspritzung und gesteuerter Selbstzündung. Zur verbesserten Verbrennungsphasensteuerung und für ein besseres Motorleistungsvermögen bei leichter Last und im Leerlauf weist der Kolben an seiner dem Zylinderkopf zugewandten Kolbenfläche eine vertiefte Schale auf, in die der Kraftstoff primär eingespritzt wird. Der Betriebsbereich der gesteuerten Selbstzündungsverbrennung kann durch die geeignete Anpassung vom Durchmesser der Schale und Einspritzwinkel und Einspritzzeitpunkt des Kraftstoffs beeinflusst werden.

Der Erfindung liegt ausgehend vom Stand der Technik die Aufgabe zugrunde, einen herkömmlichen Otto-Viertaktmotor auf einfache und kostengünstige Weise hinsichtlich seines Kraftstoffverbrauches zu optimieren. Die Erfindung soll es vorzugsweise gestatten, entsprechende Maßnahmen auch an vorhandenen Motoren einfacher Bauart nachzurüsten.

Die Aufgabe wird durch einen Verbrennungsmotor mit den Merkmalen des Anspruchs 1 und durch ein Verfahren zur Ansteuerung eines solchen Motors mit den Merkmalen des Anspruchs 7 gelöst. Weiterhin dient ein Bausatz gemäß Anspruch 4 zur Lösung der Aufgabenstellung.

Ein erfindungsgemäßer Verbrennungsmotor umfasst zunächst in vom Otto-Viertaktmotor bekannter Weise mindestens zwei Zylinder, in denen jeweils ein Kolben auf und ab bewegbar ist. Die Zylinder sind durch einen Zylinderkopf verschlossen. Der gesamte Zylinderraum V_{z} ist durch den Kolbenhub (Hubraum V_{H}) und den Brennraum (V_{B}) gebildet (V_{Z} = V_{H} + V_{B}). Ein Verdichtungsverhältnis ε ist definiert durch den Quotienten aus Zylinderraum (V_{Z}) und Brennraum (V_{B}) (ε = V_{Z} / V_{B}). Im Zylinderkopf befinden sich je Kolben Öffnungen, die durch mindestens ein Einlassventil und mindestens ein Auslassventil verschließbar sind. Einlassventil und Auslassventil sind mittels einer Ventilsteuereinrichtung, die beispielsweise eine Nockenwelle oder eine hydraulische Einrichtung sein kann, in bekannter Weise steuerbar.

Eine Zündeinrichtung ist ebenfalls vorgesehen, Dabei kann es sich um eine herkömmliche Fremdzündeinrichtung, um eine Einrichtung für eine gesteuerte Selbstzündung oder um eine hybride Zündeinrichtung handeln.

Die Kolben sind in üblicher Art über Pleuelstangen mit einer Kurbelwelle verbunden.

Erfindungsgemäß wird das Verdichtungsverhältnis des Verbrennungsmotors auf einen Wert im Bereich von 15:1 bis 22:1, vorzugsweise auf 18,5:1 eingestellt und die Ventilsteuereinrichtung so konfiguriert, dass das Einlassventil im Ansaugtakt im Bereich von 80° bis 120° Kurbelwellenwinkel nach dem oberen Totpunkt des Kolbens schließt.

Die Vorteile der Erfindung sind insbesondere darin zu sehen, dass auf einfache Art und Weise eine Möglichkeit geschaffen wurde, den Kraftstoffverbrauch bei nahezu gleicher Motorleistung deutlich zu reduzieren. Es werden bis zu 50% weniger Umweltbelastung und bis zu 50% weniger Kraftstoffverbrauch erzielt. Die Erfindung ist vorteilhaft anwendbar für Otto-Viertaktmotoren in Kraftfahrzeugen, Booten, Flugzeugen, stationären Motoren, Vergasermotoren. Die Motoren können außerdem mit Einspritzanlagen und Aufladung versehen sein.

Die Einstellung des Verdichtungsverhältnisses kann bei einem handelsüblichen Motor beispielsweise durch das Einsetzen eines neuen (größeren) Kolbens erfolgen oder durch Abschleifen des Zylinderkopfes, jeweils um den Brennraum V_{B} im Verhältnis zum Hubraum V_{H} zu verkleinern. In einem solchen Fall kann ein Bausatz verwendet werden, mit dem ein herkömmlicher Viertakt-Ottomotor mühelos umrüstbar ist. Der Bausatz umfasst einen veränderten Kolben und/oder einen veränderten Zylinderkopf und eine Ventilsteuereinrichtung oder zumindest einen Teil einer Ventilsteuereinrichtung. Die Ventilsteuereinrichtung kann eine Nockenwelle oder eine hydraulische Ventilsteuereinrichtung sein.

Der Umbau eines Otto-Viertaktmotor-Serienmotors zu einem erfindungsgemäßen Motor kann in nachfolgend beschriebener Weise erfolgen. Die Kolben werden gegen neue Kolben ausgetauscht. Die neuen Kolben verkleinern den Brennraum, weil sie an ihrer dem Zylinderkopf zugewandten Seite plan oder konvex gewölbt sind.

Eine weitere Möglichkeit ist die Vergrößerung der Kompressionshöhe des Kolbens, also des Abstandes zwischen dem Lager der Pleuelstange und dem oberen Kolbenrand. Alternativ oder zusätzlich kann der Brennraum verkleinert werden, indem der Zylinderkopf getauscht oder abgeschliffen wird. In jedem Fall muss darauf geachtet werden, dass die Ventile nicht am Kolben anschlagen. Gegebenenfalls können Ventilvertiefungen im Kolben angebracht werden oder es werden Ventile mit veränderter Ventilkopffläche verwendet.

Die Ventilsteuereinrichtung kann im einfachsten Fall durch angepasste Nocken auf die veränderte Schließzeit des Einlassventils angepasst werden. Die Nocken können als geteilte Nocken auf die Nockenwelle mittels einer Klemmverschraubung montiert sein. Es kann aber auch eine neue speziell angepasste Nockenwelle eingesetzt werden.

Selbstverständlich können zusätzlich zum erfindungsgemäßen Verfahren bekannte Ventilsteuerstrategien eingesetzt werden, um den Motorbetrieb in einem weiten Drehzahl- und Lastbereich zu optimieren.

Der Verbrennungsmotor kann aber auch werksseitig mit dem erfindungsgemäßen Verdichtungsverhältnis hergestellt sein und durch das erfindungsgemäße Verfahren betrieben werden.

Das erfindungsgemäße Verfahren zum Betrieb eines in seiner Bauform wie oben dargestellt angepassten Verbrennungsmotors mit einem Verdichtungsverhältnis im Bereich von 15:1 bis 22:1 wird nachfolgend anhand der Figuren näher erläutert. Durch dieses Verfahren werden insbesondere die Probleme vermieden, die nach bisherigen fachmännischen Erkenntnissen auftreten, wenn lediglich eine Brennraumverkleinerung vorgenommen wird (insbesondere unkontrollierte Selbstentzündung) und die die

Fachwelt bislang davon abgehalten hat, das Verdichtungsverhältnis auf diese Weise zu erhöhen.

Es zeigen:
- Fig. 1:: eine schematische Darstellung des Ablaufs eines erfindungsgemäßen Verfahrens zum Betrieb eines Verbrennungsmotors mit einem Verdichtungsverhältnis im Bereich von 15:1 bis 22:1;
- Fig. 2:: ein Steuerdiagramm zur Ventilsteuerung;
- Fig. 3:: einen Einlassnocken und einen Auslassnocken einer Ventilsteuereinrichtung.

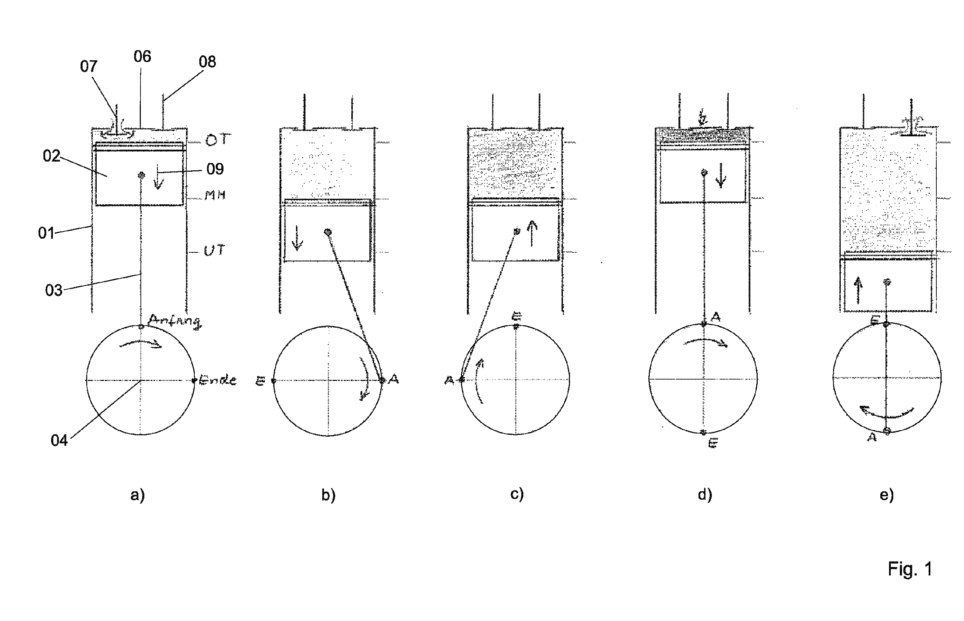

Fig. 1 zeigt den Ablauf eines erfindungsgemäßen Verfahrens zum Betrieb eines Verbrennungsmotors mit einem Verdichtungsverhältnis von 15:1 bis 22:1.

Der grundsätzliche Aufbau des Otto-Viertaktmotors ist dem Fachmann bekannt, sodass dessen auch hier gültigen Einzelheiten nicht detailliert beschrieben werden müssen. Auch im erfindungsgemäßen Verbrennungsmotor ist in einem Zylinder 01 ein Kolben 02 zwischen einem unteren Totpunkt UT und einem oberen Totpunkt OT auf und ab bewegbar angeordnet und mittels einer Pleuelstange 03 mit einer Kurbelwelle 04 exzentrisch verbunden. Der Zylinder 01 ist an seiner Oberseite durch einen Zylinderkopf 06 verschlossen. Der Zylinderkopf 06 besitzt Öffnungen für mindestens ein Einlassventil 07 und mindestens ein Auslassventil 08.

Fig. 1 Abbildung a) zeigt die Kolbenstellung zu Beginn des Ansaugtaktes. Das Einlassventil 07 ist geöffnet. Der Kolben 02 bewegt sich von OT in Richtung UT (Pfeil 09). Eine Ventilüberschneidung zu Beginn des Ansaugtaktes kann im Rahmen bekannter Ventilsteuerstrategien angewendet werden.

Der Ansaugtakt endet mit dem Schließen des Einlassventils 07 in deutlichem Unterschied zu herkömmlichen Viertaktmotoren bereits etwa in der Mitte des Kolbenhubes zu UT hin. Der Zeitpunkt des Schließens des Einlassventils kann etwa im Bereich zwischen 80° und 120° Kurbelwellenwinkel nach dem OT erfolgen. Dieser Wert ist vorzugsweise so einzustellen, dass im späteren Verdichtungstakt ein Kompressionsdruck von etwa 12 bis 17 bar erreicht wird.

Auf dem weiteren Weg des Kolbens 02 in Richtung UT (Fig. 1 Abbildung b) entsteht aufgrund geschlossener Ventile ein Unterdruck im Zylinderraum V_{Z}. Neben der angestrebten Hauptwirkung einer Erhöhung des Verdichtungsverhältnisses hat dies auch den erwünschten Nebeneffekt, dass das angesaugte Luft-Kraftstoff-Gemisch weiter abkühlt und somit die innere Kühlung des Zylinders unterstützt. Die dafür erforderlich Energie erhält der Kolben über die Kurbelwelle und die Pleuelstange von einem benachbarten Kolben im Arbeitstakt und/oder einer Schwungmasse. Der Unterdruck bleibt nach UT bestehen und unterstützt den Kolben auf dem Weg zu OT. Der Unterdruck ist etwa in der Mitte des Kolbenhubes wieder egalisiert.

Nun beginnt der Verdichtungstakt (Fig. 1 Abbildung c) in gewohnter Weise. Der Verdichtungstakt endet in der OT-Stellung des Kolbens 02. Es wird ein Kompressionsdruck von 12 bis 17 bar erreicht. Somit ergeben sich trotz des hohen Verdichtungsverhältnisses keine Selbstzündungen.

Der Arbeitstakt beginnt in der OT-Stellung des Kolbens (Fig. 1 Abbildung d). Der überspringende Funke der Zündkerze löst die Explosion des vergasten Luft-Kraftstoff-Gemisches aus. Die Verbrennung erreicht einen Verbrennungsdruck von 30 bis 50 bar. Unmittelbar nach OT erreicht die Explosion ihren Höchstdruck.

Der Ausstoßtakt (Fig. 1 Abbildung e) beginnt bei UT. Das Auslassventil 08 ist geöffnet. Die verbrannten Abgase werden während der Bewegung des Kolbens 02 in Richtung OT ausgelassen.

Vereinfacht dargestellt besteht ein wesentlicher Unterschied zwischen dem erfindungsgemäßen Motor und einem herkömmlichen Otto-Viertaktmotor darin, dass ein fünfter Takt zwischen dem Schließen des Eingangsventils und dem Beginn der Kompressionsphase eingeschoben ist (Abschnitt zwischen Abbildungen b) und c) in Fig. 1). In diesem fünften Takt bewegt sich der Kolben zunächst in Richtung UT und erzeugt dabei einen Unterdruck im Zylinderraum, während nach UT eine Kompressionsphase einsetzt, in welcher zunächst der Unterdruck egalisiert wird und ab etwa halber Hublänge ein Überdruck aufgebaut wird. Den erfindungsgemäßen Verbrennungsmotor kann man insoweit auch als Fünftaktmotor bezeichnen, wobei sich in Anerkennung des Erfinders auch die Bezeichnung "Haus-Motor" anbietet.

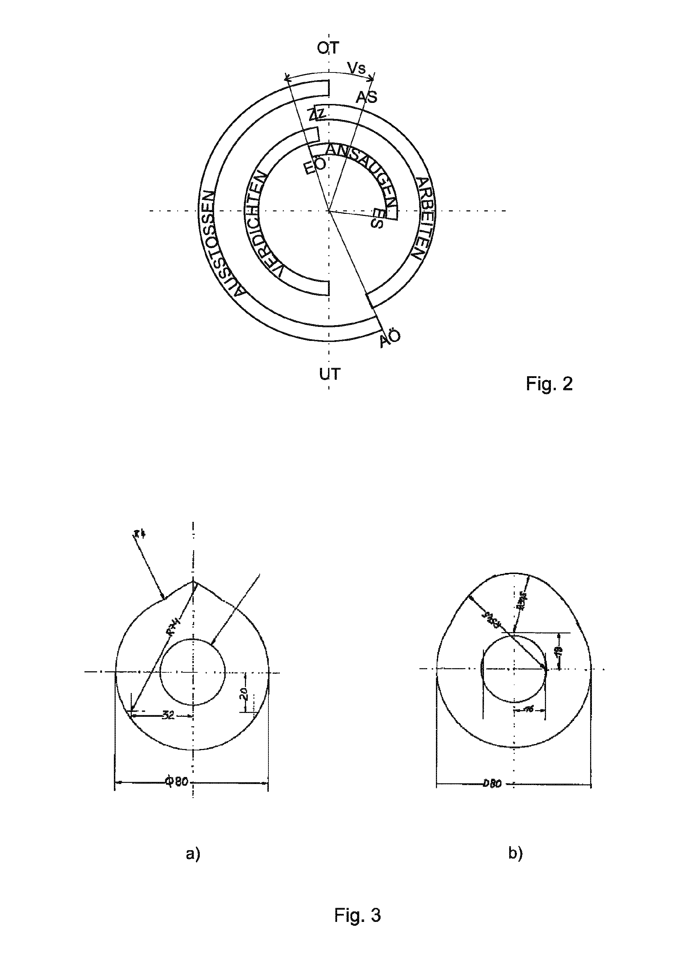

In Fig. 2 ist ein Steuerdiagramm zur Ventilsteuerung über zwei Kurbelwellenumdrehungen dargestellt. An diesem Diagramm ist zu erkennen, dass es im Bereich zwischen Ausstoß- und Ansaugtakt eine positive Ventilüberschneidung gibt und dass der Ansaugtakt verkürzt ist. Dabei haben die Abkürzungen folgende Bedeutung:
OT: oberer Totpunkt des Kolbens
UT: unterer Totpunkt des Kolbens
EÖ: Einlassventil öffnet 15° Kurbelwelle vor OT
ES: Einlassventil schließt 95° Kurbelwelle nach OT
AÖ: Auslassventil öffnet 20° Kurbelwelle vor UT
AS: Auslassventil schließt 20° Kurbelwelle nach OT
Vs Ventilüberschneidung
Zz: Zündzeitpunkt 0 bis 40° Kurbelwelle vor OT.

In Fig. 3 sind in Abbildung a ein Einlassnocken und in Abbildung b ein Auslassnocken als Ventilsteuermittel gezeigt, wie sie in einem erfindungsgemäß umgerüsteten Motor verwendet wurden.

Versuche bei einem umgebauten VW Golf III haben ergeben, dass der Kraftstoffverbrauch durch Einsatz der Erfindung um ca. 35% bei nahezu gleichbleibender Motorleistung gesenkt werden kann. Das Fahrzeug mit umgebautem Motor wurde auf einer Teststrecke gestestet und die Werte mit denen des Serienmodells vor dem Umbau verglichen. Die Teststrecke hatte eine Länge von 51,2 km, davon sind 31.4 km Landstraße, 11,6 km Autobahn und 8,2 km Stadtverkehr gefahren worden. Der Reifendruck betrug bei allen Testfahrten 2,4 bar.

Der Serienmotor verbrauchte auf der Teststrecke 9,2 1/100km, die CO₂-Emission betrug 211,12 g/km. Der umgebaute Motor verbrauchte nur 5,9 1/100km und die CO₂-Emission sank auf 136,88 g/km.

### Bezugszeichenliste

- 01 -: Zylinder
- 02 -: Kolben
- 03 -: Pleuelstange
- 04 -: Kurbelwelle
- 05 -: -
- 06 -: Zylinderkopf
- 07 -: Einlassventil
- 08 -: Auslassventil
- 09 -: Bewegungsrichtung

## Patentansprüche

1. Verbrennungsmotor mit mindestens zwei Zylindern (01), jeweils einem darin zwischen einem oberen Totpunkt (OT) und einem unteren Totpunkt (UT) hin und her beweglichen Kolben (02) und mit einem Zylinderkopf (06) mit mindestens einem Einlassventil (07) und mindestens einem Auslassventil (08), wobei ein Verdichtungsverhältnis (ε) bestimmt ist durch den Quotienten aus Zylinderraum (V_{Z}) und Brennraum (V_{B}), **dadurch gekennzeichnet, dass** das Verdichtungsverhältnis (ε) in einem Bereich von 15:1 bis 22:1 liegt und eine Ventilsteuereinrichtung derart konfiguriert ist, dass das Einlassventil (07) in einem Ansaugtakt bereits zwischen 80° und 120° Kurbelwellenwinkel nach dem oberen Totpunkt (OT) des Kolbens (02) schließt und die Kolbenbewegung bei geschlossenem Einlassventil (07) bis zum unteren Totpunkt (UT) fortgeführt wird zur Erzeugung eines Unterdrucks im Zylinderraum (V_{Z}).

2. Verbrennungsmotor nach Anspruch 1, **dadurch gekennzeichnet, dass** das Verdichtungsverhältnis zwischen 17:1 und 20:1 liegt, vorzugsweise 18,5:1 beträgt.

3. Verbrennungsmotor nach Anspruch 1 oder 2, **dadurch gekennzeichnet, dass** der Kolben (02) an seiner dem Zylinderkopf (06) zugewandten Seite eine plane Kopffläche aufweist.

4. Bausatz zum Umrüsten eines Otto-Viertaktmotors auf eine sparsame Betriebsweise umfassend,
- einen Kolben (02) und/oder einen Zylinderkopf (06), jeweils derart auf den Hubraum des umzurüstenden Motors abgestimmt, dass das Verdichtungsverhältnis einen Wert 15:1 bis 22:1 annimmt;
- eine Ventilsteuereinrichtung, die derart auf ein zu betätigendes Einlassventil (07) des Otto-Viertaktmotors abgestimmt ist, dass das Einlassventil (07) in einem Ansaugtakt bereits zwischen 80° und 120° Kurbelwellenwinkel nach einem oberen Totpunkt (OT) des Kolbens (02) schließt und nachfolgend bis zum Beginn eines neuen Ansaugtaktes geschlossen bleibt.

5. Bausatz nach Anspruch 4, **dadurch gekennzeichnet, dass** die Ventilsteuereinrichtung eine Nockenwelle ist.

6. Bausatz nach Anspruch 4 oder 5, **dadurch gekennzeichnet, dass** der Kolben (02) eine plane Kopffläche hat.

7. Verfahren zum Betrieb eines Verbrennungsmotors, der ein Verdichtungsverhältnis im Bereich von 15:1 bis 22:1 aufweist, **dadurch gekennzeichnet, dass** in einem Ansaugtakt ein Einlassventil (07) bereits zwischen 80° und 120° nach einem oberen Totpunkt (OT) eines in einem Zylinder (01) auf und ab bewegbaren Kolbens (02) geschlossen wird und die Kolbenbewegung bei geschlossenem Einlassventil (07) bis zum unteren Totpunkt (UT) fortgeführt wird zur Erzeugung eines Unterdrucks im Zylinderraum (V_{Z}).

8. Verfahren nach Anspruch 7, **dadurch gekennzeichnet, dass** zwischen einem Ausstoßtakt und dem Ansaugtakt eine positive Ventilüberschneidung erfolgt, in der Einlassventil (07) und Auslassventil (08) geöffnet sind.

9. Verfahren nach Anspruch 7 oder 8, **dadurch gekennzeichnet, dass** im Ansaugtakt ein Kraftstoff direkt in den Zylinder (01) eingespritzt wird.
